# EUROPÄISCHE PATENTSCHRIFT

(11) **EP 2 233 187 B1**
(45) Veröffentlichungstag und Bekanntmachung des Hinweises auf die Patenterteilung: **20.02.2013**
(21) Anmeldenummer: 10156360.9
(22) Anmeldetag: 12.03.2010
(51) Int. Cl.: B01D 35/16, F01M 11/03, B01D 27/08

(54) **Filtereinrichtung**
Filter device
Dispositif de filtration

(30) Priorität: 26.03.2009 DE 102009015022
(43) Veröffentlichungstag der Anmeldung: 29.09.2010
(73) Patentinhaber: Mahle International GmbH, 70376 Stuttgart (DE)
(72) Erfinder: Deschamps, Gregory, 78180, Montigny-Le-BTX (FR); Lamotte, Johann, 95260, Beaumont sur Oise (FR); Ruffet, Valentin, 92500, Rueil Malmaison (FR)
(74) Vertreter: BRP Renaud & Partner

(56) Entgegenhaltungen:
- EP-A1- 0 645 526
- JP-A- 59 147 818
- JP-A- 2000 274 222
- US-A- 5 291 863

## Beschreibung

Die vorliegende Erfindung betrifft eine Filtereinrichtung.

Moderne Filtereinrichtungen, insbesondere Ölfiltereinrichtungen, sind gekennzeichnet durch eine Vielzahl von Dichtungen, die einerseits störanfällig und andererseits teuer sind. Oftmals bereitet es jedoch Schwierigkeiten, die Filtereinrichtungen konstruktiv derart auszubilden, dass zumindest auf einen Teil dieser Dichtungen verzichtet werden kann, da der in diesem Fall zu leistende konstruktive Mehraufwand die Kosten für die entsprechenden Dichtungen bei weitem übersteigt. Dokument JP 59 147818 A beschreibt eine Filtereinrichtung mit einer Holschrambe.

Die vorliegende Erfindung beschäftigt sich mit dem Problem, für eine Filtereinrichtung eine verbesserte oder zumindest eine andere Ausführungsform anzugeben, welche insbesondere kostengünstiger herzustellen ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Hohlschraube, insbesondere eine als Ablassschraube ausgebildete Hohlschraube, in einer Filtereinrichtung, bspw. in einer Ölfiltereinrichtung, konstruktiv so auszubilden, dass diese ohne zusätzliche Dichtungen eingebaut werden kann. Die erfindungsgemäße Filtereinrichtung weist dabei in üblicher Weise ein Filterelement sowie einen zu diesem Filterelement führenden Zuführkanal für zu filterndes Fluid und einen von dem Filterelement wegführenden Abführkanal für gefiltertes Fluid auf. Die erfindungsgemäße Hohlschraube besitzt üblicherweise zumindest zwei Radialöffnungen und eine Axialöffnung und bildet dadurch einen Abschnitt des Abführkanals, wobei selbstverständlich auch denkbar ist, dass bei einer umgekehrten Beaufschlagung der Filtereinrichtung, die Hohlschraube einen Abschnitt des Zuführkanals bildet. Erfindungsgemäß weist nun die Hohlschraube einen radial abstehenden Kragen auf, an welchem eine Dichtfläche angeordnet ist, die wiederum dichtend an einer gehäuseseitigen Dichtfläche anliegt und dadurch den Zuführkanal vom Abführkanal trennt, ohne das hierfür weitere, dass heißt separat vorzusehende Dichtungen, erforderlich sind. Mit der erfindungsgemäß ausgebildeten Hohlschraube kann somit auf das Vorsehen der bisher erforderlichen zusätzlichen Dichtungen verzichtet werden, wodurch sich die erfindungsgemäße Filtereinrichtung insgesamt kostengünstiger realisieren lässt.

Bei einer vorteilhaften Weiterbildung der erfindungsgemäßen Lösung, ist zumindest eine der Dichtflächen aus Metall oder aus Kunststoff ausgebildet. Sowohl eine Ausbildung aus Metall als auch eine Ausbildung aus Kunststoff ermöglicht dabei eine dichte Anlage der beiden Dichtflächen aneinander und damit ein zuverlässiges Abdichten des Abführkanals gegenüber dem Zuführkanal. Eine extreme Abdichtung ist nicht erforderlich, da der aufgeschraubte Wechselfilter an der dortigen Verschraubung ebenfalls eine minimale Leckagerate aufweist. Die möglichst hohe Zuverlässigkeit der Abdichtung ist dabei für einen einwandfreien Betrieb der Filtereinrichtung unbedingt erforderlich, da eine aufgrund einer fehlerhaften Dichtung das Filterelement umgehende Bypassströmung zu einer Schädigung des Verbrennungsmotors führen könnte. Generell kann dabei sowohl die metallische als auch die aus Kunststoff ausgebildete Dichtfläche einstückig mit der Hohlschraube oder separat zu dieser ausgebildet sein.

Bei der erfindungsgemäßen Lösung, ist die hohlschraubenseitige Dichtfläche leicht gerundet, während die gehäuseseitige Dichtfläche konisch ausgebildet ist. Denkbar ist selbstverständlich auch eine hierzu umgekehrte Ausbildung, so dass die hohlschraubenseitige Dichtfläche konisch und die gehäuseseitige Dichtfläche leicht abgerundet ausgebildet sind. In beiden Fällen kann jedoch eine besonders effektive Dichtwirkung der miteinander zusammenwirkenden Dichtflächen erreicht werden, insbesondere im Vergleich zu zwei plan ausgebildeten Dichtflächen, da eine leicht gerundete Dichtfläche mit einer damit zusammenwirkenden leicht konischen Dichtfläche leichter abzudichten sind, als bspw. zwei plan ausgebildete und miteinander zusammenwirkende Dichtflächen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht auf eine erfindungsgemäße Filtereinrichtung,
- Fig. 2: eine Schnittdarstellung durch die Filtereinrichtung gemäß der Fig. 1,
- Fig. 3: eine Detaildarstellung im Bereich der Dichtflächen einer Hohlschraube und eines Gehäuses der Filtereinrichtung.

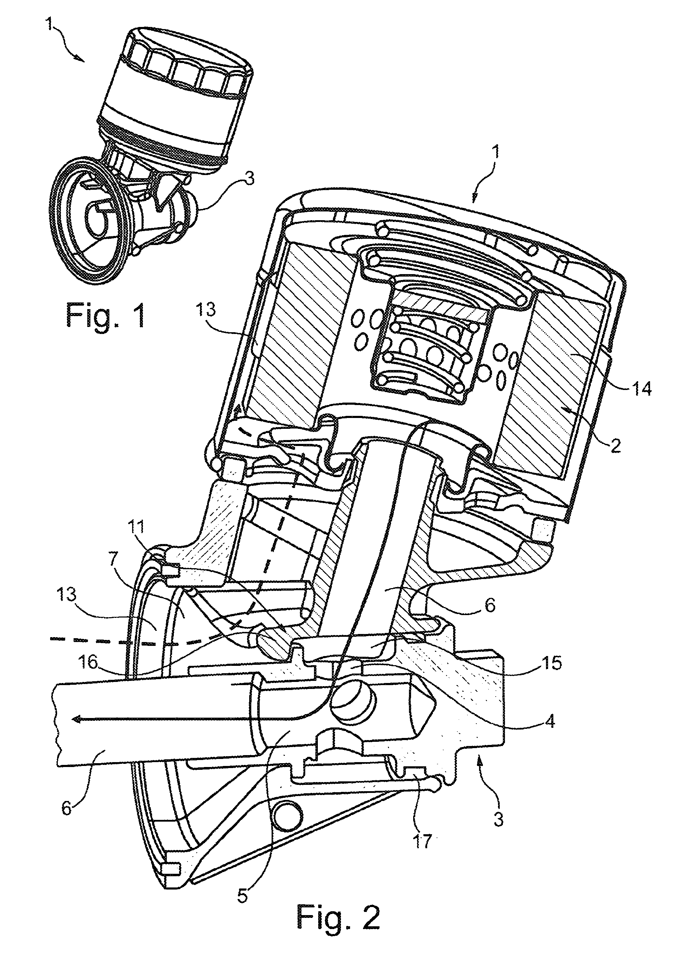

Entsprechend den Fig. 1 und 2, weist eine erfindungsgemäße Filtereinrichtung 1 ein Filterelement 2 (vgl. Fig. 2) auf, mittels welchem ein zu filterndes Fluid, bspw. Kraftstoff oder Öl, gefiltert wird. Das Filterelement 2 kann dabei in bekannter Weise als Ringfilterelement ausgebildet sein. Das (Wechsel-)filterelement 2 der Filtereinrichtung 1 ist mittels eines Anschlussstücks 11 an ein Gehäuse, wie z. B. einem Verbrennungsmotor oder ein Getriebegehäuse angeschlossen. Über eine große Öffnung 12 strömt das ungefilterte Fluid über einen Rohraum 13 in das (Wechsel-)filterelement 2. Nach dem Durchgang durch ein Filtermedium 14 fließt das gefilterte Fluid über einen Abführkanal 6 über eine Hohlschraube 3 und eine Axialöffnung 5 wieder in das Gehäuse zurück. Die Hohlschraube 3 weist dabei zumindest zwei Radialöffnungen 4 und obige Axialöffnung 5 auf, und bildet zugleich einen Abschnitt des Abführkanals 6, der dabei zum Abführen von gefiltertem Fluid aus dem Filterelement 2 dient. Demgegenüber dient ein Zuführkanal 7 zum Zuführen von ungefiltertem Fluid, bspw. verschmutztem Öl, zum Filterelement 2.

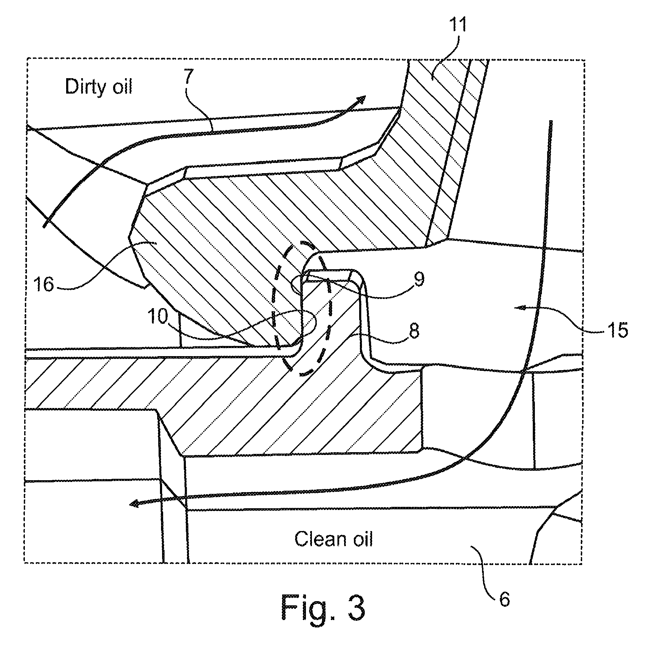

Erfindungsgemäß weist nun die Hohlschraube 3 einen Kragen 8 mit einer Dichtfläche 9 auf, die dichtend an einer gehäuseseitigen Dichtfläche 10 anliegt und dadurch den Zuführkanal 7 vom Abführkanal 6 trennt (vgl. insbesondere Fig. 3). Die Filtereinrichtung 1 kann dabei generell als Ölfiltereinrichtung, aber auch als Kraftstofffiltereinrichtung, ausgebildet sein.

Die hohlschraubenseitige Dichtfläche 9 ist dabei vorzugsweise einstückig mit der Hohlschraube 3 ausgebildet, kann aber auch separat zu dieser hergestellt werden. Generell ist dabei auch denkbar, dass zumindest eine der beiden Dichtflächen 9,10 aus Metall oder aus Kunststoff ausgebildet sind, wobei insbesondere denkbar ist, dass die gesamte Hohlschraube 3 aus Kunststoff ausgebildet ist.

Die gemäß der Fig. 2 im Detail dargestellten Dichtflächen 9 und 10 sind plan ausgebildet und liegen somit flächig und dicht aneinander an. Erfindungsgemäßist eine der beiden Dichtflächen 9, 10 leicht gerundet und die gegenüberliegende Dichtfläche 10, 9 konisch ausgebildet, wodurch eine im Vergleich zu planen Dichtflächen 9, 10 leichter zu erzielende Dichtwirkung erreichbar ist. Im Anschlussstück 11 ist an der Stelle mit den Radialöffnungen 4 in der Hohlschraube 3 ein Raum 15 ausgebildet, so dass mit möglichst geringem Druckverlust das gereinigte Fluid durch die Hohlschraube 3 abfließen kann. Im Anschlussstück 11 ist ein umlaufender Anschlag 16 vorgesehen, der auf einer Seite eine Dichtfläche 10 aufweist und der auf der anderen Seite strömungsgünstig ausgestaltet ist, so dass er die Strömung des ungefilterten Fluids durch den Rohraum 13 nicht stört. Durch dieses Anschlussstück 11 wird das zu filternde Fluid und das gefilterte Fluid zur Filtereinrichtung 1 zu- und abgeleitet. Zur Umgebung hin ist die Hohlschraube 3 mittels einer gewöhnlichen O-Ringsdichtung 17 abgedichtet.

Generell kann mit der erfindungsgemäß ausgebildeten Hohlschraube 3 auf eine Anordnung separater Dichtungen verzichtet werden, wodurch sich einerseits die Teilevielfalt und verbunden damit die Lager- und Logistikkosten und andererseits die Herstellungskosten reduzieren lassen.

## Patentansprüche

1. Filtereinrichtung (1),
- mit einem in einem Gehäuse angeordneten Filterelement (2),
- mit einem Zuführkanal (7) für zu filterndes Fluid,
- mit einem Abführkanal (6) für gefiltertes Fluid,
- mit einer Hohlschraube (3), die zumindest zwei Radialöffnungen (4) und eine Axialöffnung (5) aufweist und einen Abschnitt des Abführkanals (6) bildet,
- wobei die Hohlschraube (3) einen Kragen (8) mit einer Dichtfläche (9) aufweist,
- wobei die Dichtfläche (9) dichtend an einer gehäuseseitigen Dichtfläche (10) anliegt und **dadurch** den Zuführkanal (7) vom Abführkanal (6) trennt,
**dadurch gekennzeichnet,**
**dass** die hohlschraubenseitige Dichtfläche (9) leicht gerundet und die gehäuseseitige Dichtfläche (10) konisch ausgebildet sind, oder umgekehrt.

2. Filtereinrichtung nach Anspruch 1,
**dadurch gekennzeichnet,**
**dass** die Filtereinrichtung (1) als Ölfiltereinrichtung ausgebildet ist.

3. Filtereinrichtung nach Anspruch 1 oder 2,
**dadurch gekennzeichnet,**
**dass** die hohlschraubenseitige Dichtfläche (9) einstückig mit der Hohlschraube (3) oder separat zu dieser ausgebildet ist.

4. Filtereinrichtung nach einem der Ansprüche 1 bis 3,
**dadurch gekennzeichnet,**
**dass** zumindest eine Dichtfläche (9,10) aus Metall oder aus Kunststoff ausgebildet ist.

## Claims

1. A filter device (1),
- having a filter element (2) arranged in a housing,
- having a supply duct (7) for fluid to be filtered,
- having a discharge duct (6) for filtered fluid,
- having a hollow screw (3), which has at least two radial openings (4) and an axial opening (5) and forms a section of the discharge duct (6),
- wherein the hollow screw (3) has a collar (8) with a sealing face (9),
- wherein the sealing face (9) bears in a sealing manner against a housing-side sealing face (10) and thereby separates the supply duct (7) from the discharge duct (6),
**characterised in that**
the sealing face (9) on the hollow screw side is slightly rounded and the sealing face (10) on the housing side is conical, or vice versa.

2. The filter device according to Claim 1,
**characterised in that**
the filter device (1) is configured as an oil filter device.

3. The filter device according to Claim 1 or 2,
**characterised in that**
the sealing face (9) on the hollow screw side is formed in one piece with the hollow screw (3) or separately from the latter.

4. The filter device according to one of Claims 1 to 3,
**characterised in that**
at least one sealing face (9, 10) is formed from metal or plastic.

## Revendications

1. Dispositif de filtre (1),
- comportant un élément de filtre (2) disposé dans un logement,
- comportant un canal d'amenée (7) d'un fluide à filtrer,
- comportant un canal d'évacuation (6) du fluide filtré,
- comportant une vis creuse (3), qui présente au moins deux ouvertures radiales (4) et une ouverture axiale (5) et forme une portion du canal d'évacuation (6),
- dans lequel la vis creuse (3) présente un collier (8) avec une surface d'étanchéité (9),
- dans lequel la surface d'étanchéité (9) vient reposer de manière étanche sur une surface d'étanchéité (10) du côté du logement et sépare ainsi le canal d'amenée (7) du canal d'évacuation (6),
**caractérisé en ce que**
la surface d'étanchéité du côté de la vis creuse (9) est légèrement arrondie et la surface d'étanchéité du côté du logement (10) a une configuration conique, ou inversement.

2. Dispositif de filtre selon la revendication 1,
**caractérisé en ce que**
le dispositif de filtre (1) est conçu comme un dispositif de filtre à huile.

3. Dispositif de filtre selon les revendications 1 ou 2,
**caractérisé en ce que**
la surface d'étanchéité du côté de la vis creuse (9) est réalisée en un seul tenant avec la vis creuse (3) ou séparée de celle-ci.

4. Dispositif de filtre selon une des revendications 1 à 3,
**caractérisé en ce que**
au moins une surface d'étanchéité (9, 10) est réalisée en métal ou en plastique.
